# EUROPEAN PATENT APPLICATION

(11) **EP 3 173 912 A1**
(43) Date of publication of application: **31.05.2017**
(21) Application number: 16200718.1
(22) Date of filing: 25.11.2016
(51) Int. Cl.: G06F 3/041, G06F 1/32

(54) **METHOD AND APPARATUS FOR PROCESSING POINT-REPORTING OF TOUCHSCREEN**

(30) Priority: 25.11.2015 CN 201510834182
(71) Applicant: Xiaomi Inc., Beijing 100085 (CN)
(72) Inventor: JIANG, Zhongsheng, Haidian District, Beijing 100085 (CN); YANG, Kun, Haidian District, Beijing 100085 (CN); LIU, Dan, Haidian District, Beijing 100085 (CN)
(74) Representative: Grunert, Marcus

(57) **Abstract**

A method for processing point-reporting of a touch screen is applied to the touch screen of a first terminal and includes: receiving (110) a first status signal sent by a power management module when the power management module of the first terminal detects that a charging port of the first terminal is in a connection status, the first status signal indicating the connection status of the charging port of the first terminal; setting up (120) a first sensitivity threshold corresponding to the first status signal; and processing (130) point-reporting of the touch screen according to the first sensitivity threshold, and sending point-reporting information obtained after the processing to a host terminal of the first terminal. Therefore, in the present disclosure, when it is learned that the charging port is in the connection status, a corresponding sensitivity threshold may be automatically set up.

## Description

### TECHNICAL FIELD

The present disclosure relates to the field of network communication technologies, and more particularly, to a method and apparatus for processing point-reporting of a touchscreen.

### BACKGROUND

With constant development of network communication technologies, smart mobile phones having touch screens are more and more widely used. In related technologies, the smart mobile phones provide many new functions, and facilitate user operations. However, when the smart mobile phones are connected to chargers or other terminals, response sensitivities of the touch screens are greatly improved, and even errors of point-reporting may often occur, which brings puzzlement to users.

### SUMMARY

Accordingly, the present invention provides a method and apparatus for processing point-reporting of a touch screen in accordance with claims which follow.

According to a first aspect of embodiment of the present invention, there is provided a method for processing point-reporting of a touch screen, which is applied to the touch screen of a first terminal and includes:
receiving a first status signal sent by a power management module when the power management module of the first terminal detects that a charging port of the first terminal is in a connection status, the first status signal indicating the connection status of the charging port of the first terminal;
setting up a first sensitivity threshold corresponding to the first status signal; and
processing point-reporting of the touch screen according to the first sensitivity threshold, and sending point-reporting information obtained after the processing to a host terminal of the first terminal.

In an embodiment, the receiving a first status signal sent by a power management module includes:
receiving the first status signal forwarded by the host terminal, the first status signal being sent by the power management module to the host terminal and then forwarded by the host terminal to the touch screen.

In an embodiment, the setting up a first sensitivity threshold corresponding to the first status signal further includes:
setting up a first scanning frequency corresponding to the first status signal.

In an embodiment, the processing point-reporting of the touch screen according to the first sensitivity threshold includes:
processing point-reporting of the touch screen according to the first sensitivity threshold and the first scanning frequency.

In an embodiment, the method further includes:
receiving a second status signal sent by the power management module when the power management module detects that the charging port is in an idle status, the second status signal indicating the idle status of the charging port;
setting up a second sensitivity threshold corresponding to the second status signal, the second sensitivity threshold being lower than the first sensitivity threshold; and
processing point-reporting of the touch screen according to the second sensitivity threshold, and sending point-reporting information obtained after the processing to the host terminal.

In an embodiment, the receiving a second status signal sent by the power management module includes:
receiving the second status signal forwarded by the host terminal, the second status signal being sent by the power management module to the host terminal and then forwarded by the host terminal to the touch screen.

In an embodiment, the setting up a second sensitivity threshold corresponding to the second status signal further includes:
setting up a second scanning frequency corresponding to the second status signal.

In an embodiment, the processing point-reporting of the touch screen according to the second sensitivity threshold includes:
processing point-reporting of the touch screen according to the second sensitivity threshold and the second scanning frequency.

According to a second aspect of the embodiment of the present invention, there is provided an apparatus for processing point-reporting of a touch screen, which is applied to a touch screen of a first terminal and includes:
a first receiving module configured to receive a first status signal sent by a power management module when the power management module of the first terminal detects that a charging port of the first terminal is in a connection status, the first status signal indicating the connection status of the charging port of the first terminal;
a first setting-up module configured to set up a first sensitivity threshold corresponding to the first status signal received by the first receiving module; and
a first processing module configured to process point-reporting of the touch screen according to the first sensitivity threshold set up by the first setting-up module, and send point-reporting information obtained after the process to a host terminal of the first terminal.

In an embodiment, the first receiving module includes:
a first receiving submodule configured to receive the first status signal forwarded by the host terminal, the first status signal being sent by the power management module to the host terminal and then forwarded by the host terminal to the touch screen.

In an embodiment, the first setting-up module includes:
a first setting-up submodule configured to set up a first scanning frequency corresponding to the first status signal.

In an embodiment, the first processing module includes:
a first processing submodule configured to process point-reporting of the touch screen according to the first sensitivity threshold and the first scanning frequency.

In an embodiment, the apparatus further includes:
a second receiving module configured to receive a second status signal sent by the power management module when the power management module detects that the charging port is in an idle status, the second status signal indicating the idle status of the charging port;
a second setting-up module configured to set up a second sensitivity threshold corresponding to the second status signal received by the second receiving module, the second sensitivity threshold being lower than the first sensitivity threshold; and
a second processing module configured to process point-reporting of the touch screen according to the second sensitivity threshold set up by the second setting-up module, and send point-reporting information obtained after the process to the host terminal.

In an embodiment, the second receiving module includes:
a second receiving submodule configured to receive the second status signal forwarded by the host terminal, the second status signal being sent by the power management module to the host terminal and then forwarded by the host terminal to the touch screen.

In an embodiment, the second setting-up module includes:
a second setting-up submodule configured to set up a second scanning frequency corresponding to the second status signal.

In an embodiment, the second processing module includes:
a second processing submodule configured to process point-reporting of the touch screen according to the second sensitivity threshold and the second scanning frequency.

According to a third aspect of the embodiment of the present invention, there is provided an apparatus for processing point-reporting of a touch screen, which is applied to a touch screen of a first terminal and includes:
a processor, and
a memory configured to store instructions executable by the processor;
wherein the processor is configured to:
   receive a first status signal sent by a power management module when the power management module of the first terminal detects that a charging port of the first terminal is in a connection status, the first status signal indicating the connection status of the charging port of the first terminal;
   set up a first sensitivity threshold corresponding to the first status signal; and
   process point-reporting of the touch screen according to the first sensitivity threshold, and send point-reporting information obtained after the process to a host terminal of the first terminal. Advantageously, the first receiving module, the first setting-up module, and the first processing module, and optionally the other modules of the apparatus according to the second aspect of the present invention are part of or included in the processor.

According to a fourth aspect of the embodiment of the present invention, there is provided a computer program which, when being executed on a processor of a terminal device, performs any one of the above methods, and a program product having stored therein said computer program.

The technical solution provided by the embodiment of the present disclosure may include the following beneficial effects.

The touch screen of the first terminal in the present disclosure may receive a first status signal sent by a power management module, where the first status signal is used for indicating that the charging port of the first terminal is in a connection status; set up a first sensitivity threshold corresponding to the first status signal; process point-reporting of the touch screen according to the first sensitivity threshold; and send point-reporting information obtained after the process to a host terminal of the first terminal. Accordingly, when it is learned that the charging port is in the connection status, the touch screen may automatically set up a corresponding sensitivity threshold. In this way, an accuracy rate in processing point-reporting of a touch screen is improved, and an error of point-reporting of the touch screen can be avoided.

After receiving the first status signal, the touch screen of the first terminal in the present disclosure may also set up a first sensitivity threshold and a first scanning frequency, and process point-reporting of the touch screen according to the first sensitivity threshold and the first scanning frequency. An error of point-reporting may be minimized by using point-reporting information obtained after such processing. In this way, confusion brought about to users due to an error of point-reporting can be avoided, and user experience is improved.

The touch screen of the first terminal in the present disclosure may also receive a second status signal sent by a power management module, where the second status signal is used for indicating that the charging port is in an idle status; set up a second sensitivity threshold according to the second status signal, where the second sensitivity threshold is lower than the first sensitivity threshold; process point-reporting of the touch screen according to the second sensitivity threshold; and send point-reporting information obtained after the process to a host terminal. Since, particularly, the second sensitivity threshold is lower than the first sensitivity threshold, under a premise of guaranteeing to correctly process point-reporting of the touch screen, energy consumption is saved, and a safety performance of the terminal is improved.

After receiving the second status signal, the touch screen of the first terminal in the present disclosure may also set up a second sensitivity threshold and a second scanning frequency, and process point-reporting of the touch screen according to the second sensitivity threshold and the second scanning frequency. An error of point-reporting may be minimized by using point-reporting information obtained after such processing. In this way, confusion brought about to users due to an error of point-reporting can be avoided, and the user experience is improved.

The power management module of the first terminal in the present disclosure may send the first status signal used for indicating that the charging port is in the connection status or the second status signal used for indicating that the charging port is in the idle status to the touch screen by means of hardware interrupt or software instructions. In this way, personality design requirements of the first terminal are fulfilled, and efficiency in processing point-reporting of a touch screen is thus improved.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 illustrates a flowchart of a method for processing point-reporting of a touch screen according to an exemplary embodiment of the present disclosure;
FIG. 2 illustrates a flowchart of a method for processing point-reporting of a touch screen according to another exemplary embodiment of the present disclosure;
FIG. 3 illustrates an application scenario diagram of a method for processing point-reporting of a touch screen according to an exemplary embodiment of the present disclosure;
FIG. 4 illustrates a block diagram of an apparatus for processing point-reporting of a touch screen according to an exemplary embodiment of the present disclosure;
FIG. 5 illustrates a block diagram of an apparatus for processing point-reporting of a touch screen according to another exemplary embodiment of the present disclosure;
FIG. 6 illustrates a block diagram of an apparatus for processing point-reporting of a touch screen according to another exemplary embodiment of the present disclosure;
FIG. 7 illustrates a block diagram of an apparatus for processing point-reporting of a touch screen according to another exemplary embodiment of the present disclosure;
FIG. 8 illustrates a block diagram of an apparatus for processing point-reporting of a touch screen according to another exemplary embodiment of the present disclosure;
FIG. 9 illustrates a block diagram of an apparatus for processing point-reporting of a touch screen according to another exemplary embodiment of the present disclosure;
FIG. 10 illustrates a block diagram of an apparatus for processing point-reporting of a touch screen according to another exemplary embodiment of the present disclosure;
FIG. 11 illustrates a block diagram of an apparatus for processing point-reporting of a touch screen according to an exemplary embodiment of the present disclosure; and
FIG. 12 illustrates a block diagram of an apparatus for processing point-reporting of a touch screen according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used in the present disclosure are only for the purpose of description of specific embodiments, and are not intended to limit the present disclosure. As used in the present disclosure and appended claims, the singular forms "a/an", "said" and "the" intend to also include the plural form, unless the content clearly dictates otherwise. It should also be understood that the term "and/or" used herein means to include arbitrary and all possible combinations of one or more items listed in association.

It should be understood that terms such as "first", "second", "third" and the like may be used herein for description of information. However, the information shall not be restricted to these terms. These terms are only intended to distinguish among information of the same type. For example, under the circumstance of not departing from the scope of the present disclosure, a first information can also be referred to as a second information, similarly, a second information can also be referred to as a first information. Depending on the context, term "if" used herein can be interpreted as "when", "while" or "in response to determining".

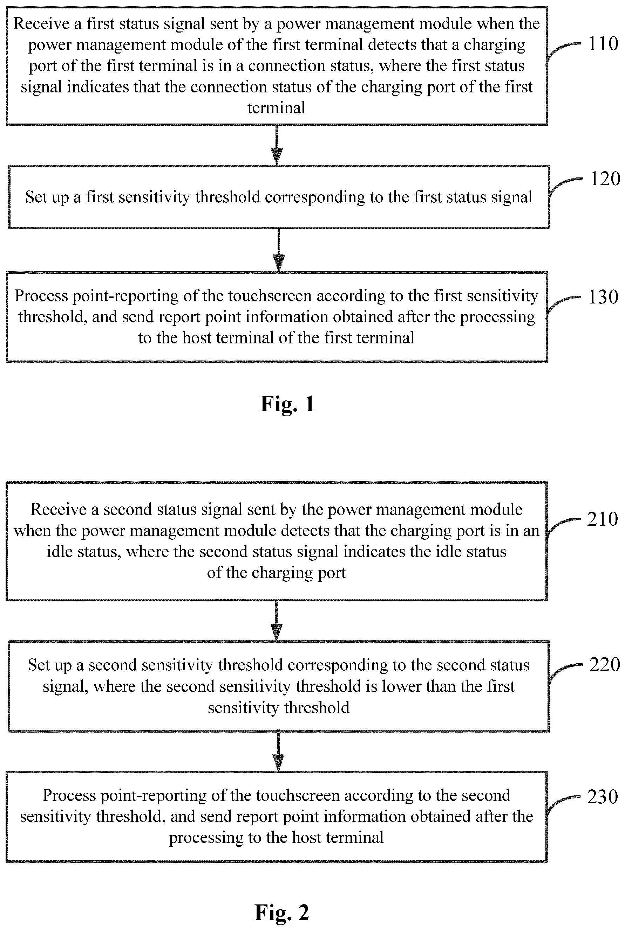

As shown in FIG. 1, which is a flowchart of a method for processing point-reporting of a touch screen shown according to an exemplary embodiment of the present disclosure, the method may be applied to a touch screen of a first terminal, including the following steps.

In Step 110, a first status signal sent by a power management module is received when the power management module of the first terminal detects that a charging port of the first terminal is in a connection status, where the first status signal is used for indicating that the charging port of the first terminal is in the connection status.

The first terminal in the embodiments of the present disclosure may be any smart terminal having a touch screen, for example, a mobile phone, a tablet computer, a personal digital assistant (PDA), a personal computer (PC) and so on. The smart terminal may be connected to a router by means of WLAN and access the server on the public network by means of the router.

The first terminal in the embodiments of the present disclosure may include a power management terminal (namely, a power processing module), a touch screen and a host terminal. The host terminal may further include a central processing unit (CPU) and a memory, etc.

In the embodiments of the present disclosure, the touch screen receives first status information sent by a power management terminal, where the first status signal is used for indicating that the charging port of the first terminal is in the connection status. The connection status may refer to a fact that the first terminal is connected with a charger so that the first terminal is charged through the charger; and the connection status may also refer to a fact that the first terminal is connected with a second terminal so that data can be transmitted between the first terminal and the second terminal.

In Step 120, a first sensitivity threshold is set up corresponding to the first status signal.

In the embodiments of the present disclosure, when the charging port of the first terminal is in the connection status, a sensitivity threshold needs to be reset for the touch screen of the first terminal. For example, a higher sensitivity threshold may be set up to prevent the touch screen from generating an error point-reporting due to noise caused by common mode interference.

In Step 130, point-reporting of the touch screen is processed according to the first sensitivity threshold, and point-reporting information obtained after the process is sent to the host terminal of the first terminal.

As can be seen from the above embodiments, when the power management module of the first terminal detects that the charging port of the first terminal is in a connection status, a first status signal sent by the power management module is received, where the first status signal is used for indicating that the charging port of the first terminal is in the connection status. A first sensitivity threshold is set up corresponding to the first status signal, point-reporting of the touch screen is processed according to the first sensitivity threshold, and point-reporting information obtained after the process is sent to the host terminal of the first terminal. Accordingly, when it is learned that the charging port is in the connection status, the touch screen may automatically set up a corresponding sensitivity threshold. In this way, an accuracy rate in processing point-reporting of the touch screen is improved, and an error of point-reporting of the touch screen can be avoided.

In an embodiment, when executing Step 110 in which a first status signal sent by the power management module is received, following two reception modes may be implemented.
(1) The first status signal directly sent by a power management module is received. For example, the power management terminal directly sends first status information to the touch screen by means of hardware interrupt.
(2) The first status signal forwarded by the host terminal is received, where the first status signal is sent by the power management module to the host terminal and then is forwarded by the host terminal to the touch screen. For example, the power management terminal sends the first status signal to the host terminal by means of software instructions, and then the host terminal forwards the first status signal to the touch screen.

As can be seen from the above embodiments, the power management module may send the first status signal to the touch screen by means of hardware interrupt or software instructions. In this way, personality design requirements of the first terminal are fulfilled, and efficiency in processing point-reporting of the touch screen is thus improved.

In an embodiment, when executing Step 120 in which a first sensitivity threshold is set up corresponding to the first status signal, a first scanning frequency may also be set up corresponding to the first status signal.

Accordingly, when executing Step 130 in which point-reporting of the touch screen is processed according to the first sensitivity threshold, point-reporting of the touch screen may be processed according to the first sensitivity threshold and the first scanning frequency.

As can be seen from the above embodiments, after receiving the first status signal, a first sensitivity threshold and a first scanning frequency may be set up, and point-reporting of the touch screen is processed according to the first sensitivity threshold and the first scanning frequency. An error of point-reporting may be minimized by using point-reporting information obtained after such processing. In this way, confusion brought about to users due to an error of point-reporting can be avoided, and user experience is improved.

As shown in FIG. 2, which is a flowchart of a method for processing point-reporting of a touch screen shown according to another exemplary embodiment of the present disclosure, the method may be applied to a touch screen of a first terminal. Based on the method as shown in FIG. 1, the method may include the following steps.

In Step 210, a second status signal sent by the power management module is received when the power management module detects that the charging port is in an idle status, where the second status signal is used for indicating that the charging port is in the idle status.

In Step 220, a second sensitivity threshold is set up corresponding to the second status signal, where the second sensitivity threshold is lower than the first sensitivity threshold.

In the embodiments of the present disclosure, when the charging port of the first terminal is in the idle status, a sensitivity threshold needs to be reset for the touch screen of the first terminal. For example, a lower sensitivity threshold may be set up to implement point-reporting of the touch screen.

In Step 230, point-reporting of the touch screen is processed according to the second sensitivity threshold, and point-reporting information obtained after the process is sent to the host terminal.

As can be seen from the above embodiments, a second status signal sent by the power management module is received when the power management module detects that the charging port is in an idle status, where the second status signal is used for indicating that the charging port is in an idle status. A second sensitivity threshold is set up corresponding to the second status signal, where the second sensitivity threshold is lower than the first sensitivity threshold. Point-reporting of the touch screen is processed according to the second sensitivity threshold, and point-reporting information obtained after the process is sent to a host terminal. Since, particularly, the second sensitivity threshold is lower than the first sensitivity threshold, under a premise of guaranteeing to correctly process point-reporting of the touch screen, energy consumption is saved, and a safety performance of the terminal is improved.

In an embodiment, when executing Step 210 in which a second status signal sent by the power management module is received, following two reception modes may be implemented.
(1) The second status signal directly sent by the power management module is received. For example, the power management terminal directly sends the second status signal to the touch screen by means of hardware interrupt.
(2) The second status signal forwarded by the host terminal is received, where the second status signal is sent by the power management module to the host terminal and then is forwarded by the host terminal to the touch screen. For example, the power management terminal sends the second status signal to the host terminal by means of software instructions, and then the host terminal forwards the second status signal to the touch screen.

As can be seen from the above embodiments, the power management module may send the second status signal to the touch screen by means of hardware interrupt or software instructions. In this way, personality design requirements of the first terminal are fulfilled, and efficiency in processing point-reporting of the touch screen is thus improved.

In an embodiment, when executing Step 220 in which a second sensitivity threshold is set up corresponding to the second status signal, a second scanning frequency may also be set up corresponding to the second status signal.

Accordingly, when executing Step 230 in which point-reporting of the touch screen is processed according to the second sensitivity threshold, point-reporting of the touch screen may be processed according to the second sensitivity threshold and the second scanning frequency.

As can be seen from the above embodiments, after receiving the second status signal, a second sensitivity threshold and a second scanning frequency may be set up, and point-reporting of the touch screen is processed according to the second sensitivity threshold and second first scanning frequency. An error of point-reporting may be minimized by using point-reporting information obtained after such processing. In this way, confusion brought about to users due to an error of point-reporting can be avoided, and user experience is improved.

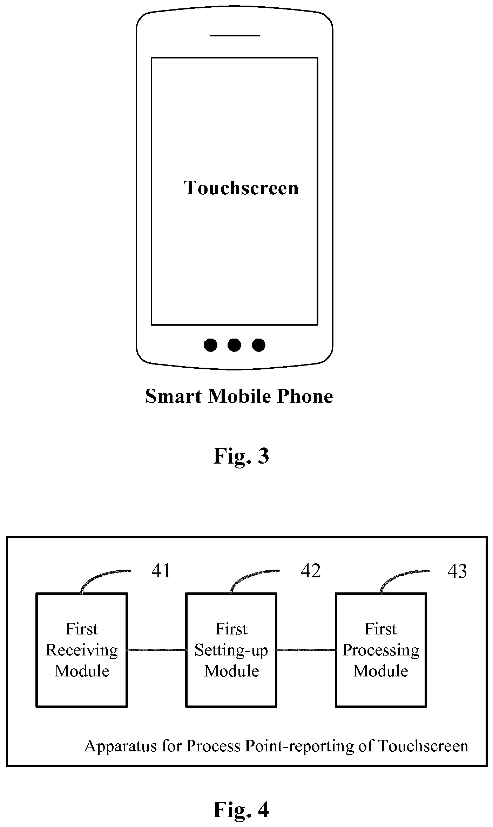

As shown in FIG. 3, FIG. 3 illustrates an application scenario diagram of a method for processing point-reporting of a touch screen according to an exemplary embodiment of the present disclosure. The application scenario includes a smart mobile phone serving as the first terminal, where the smart mobile phone includes a power management module, a charging port, a host terminal and a touch screen.

The power management module is in charge of detecting a status of the charging port. When it is detected that the charging port of the first terminal is in a connection status, a first status signal used for indicating that the charging port is in the connection status may be directly sent to the touch screen, or the first status signal may be forwarded to the touch screen via the host terminal. Similarly, when it is detected that the charging port of the first terminal is in an idle status, a second status signal used for indicating that the charging port is in the idle status may be directly sent to the touch screen, or the second status signal may be forwarded to the touch screen via the host terminal.

The touch screen is in charge of adjusting a manner for processing point-reporting of the touch screen according to a received status signal. After the first status signal is received, a first sensitivity threshold is set up, and point-reporting of the touch screen is processed according to the first sensitivity threshold. Similarly, after the second status signal is received, a second sensitivity threshold is set up, point-reporting of the touch screen is processed according to the second sensitivity threshold, and point-reporting information obtained after the processing is sent to the host terminal.

Corresponding to the preceding embodiments of the method for processing point-reporting of a touch screen, the present disclosure also provides embodiments of an apparatus for processing point-reporting of a touch screen.

As shown in FIG. 4, which is a block diagram of an apparatus for processing point-reporting of a touch screen shown according to an exemplary embodiment of the present disclosure, the apparatus may be applied to a touch screen of a first terminal and used for executing the method for processing point-reporting of a touch screen as shown in FIG. 1. The apparatus may include a first receiving module 41, a first setting-up module 42 and a first processing module 43.

The first receiving module 41 is configured to receive a first status signal sent by a power management module when the power management module of the first terminal detects that a charging port of the first terminal is in a connection status, where the first status signal is used for indicating that the charging port of the first terminal is in the connection status.

The first setting-up module 42 is configured to set up a first sensitivity threshold corresponding to the first status signal received by the first receiving module 41.

The first processing module 43 is configured to process point-reporting of the touch screen according to the first sensitivity threshold set up by the first setting-up module 42, and send point-reporting information obtained after the process to a host terminal of the first terminal.

As can be seen from the above embodiments, when the power management module of the first terminal detects that the charging port of the first terminal is in a connection status, a first status signal sent by the power management module is received, where the first status signal is used for indicating that the charging port of the first terminal is in the connection status. A first sensitivity threshold is set up corresponding to the first status signal, point-reporting of the touch screen is processed according to the first sensitivity threshold, and point-reporting information obtained after the process is sent to the host terminal of the first terminal. Accordingly, when it is learned that the charging port is in the connection status, the touch screen may automatically set up a corresponding sensitivity threshold. In this way, an accuracy rate in processing point-reporting of the touch screen is improved, and an error of point-reporting can be avoided.

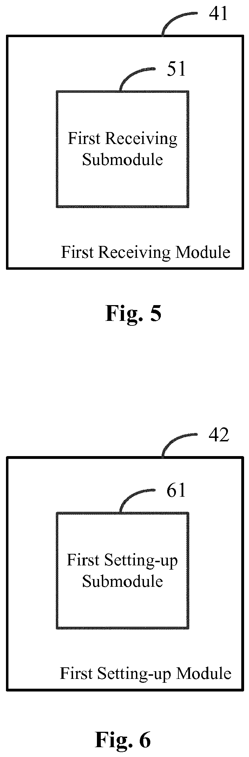

As shown in FIG. 5, which is a block diagram of an apparatus for processing point-reporting of a touch screen shown according to another exemplary embodiment of the present disclosure. In this embodiment, on the basis of the embodiment as shown in the foregoing FIG. 4, the first receiving module 41 may include a first receiving submodule 51.

The first receiving submodule 51 is configured to receive the first status signal forwarded by the host terminal, where the first status signal is sent by the power management module to the host terminal and then is forwarded by the host terminal to the touch screen.

The first status signal received by the first receiving module 41 may be first status information directly sent by the power management terminal to the touch screen by means of hardware interrupt. The first status signal received by the first receiving submodule 51 may be a first status signal sent by the power management terminal to the host terminal by means of software instructions and then forwarded by the host terminal to the touch screen.

As can be seen from the above embodiments, the power management module may send the first status signal to the touch screen by means of hardware interrupt or software instructions. In this way, personality design requirements of the first terminal are fulfilled, and efficiency in processing point-reporting of the touch screen is thus improved.

As shown in FIG. 6, which is a block diagram of an apparatus for processing point-reporting of a touch screen shown according to another exemplary embodiment of the present disclosure. In this embodiment, on the basis of the embodiment as shown in the foregoing FIG. 4 or FIG. 5, the first setting-up module 42 may include a first setting-up submodule 61.

The first setting-up submodule 61 is configured to set up a first scanning frequency corresponding to the first status signal.

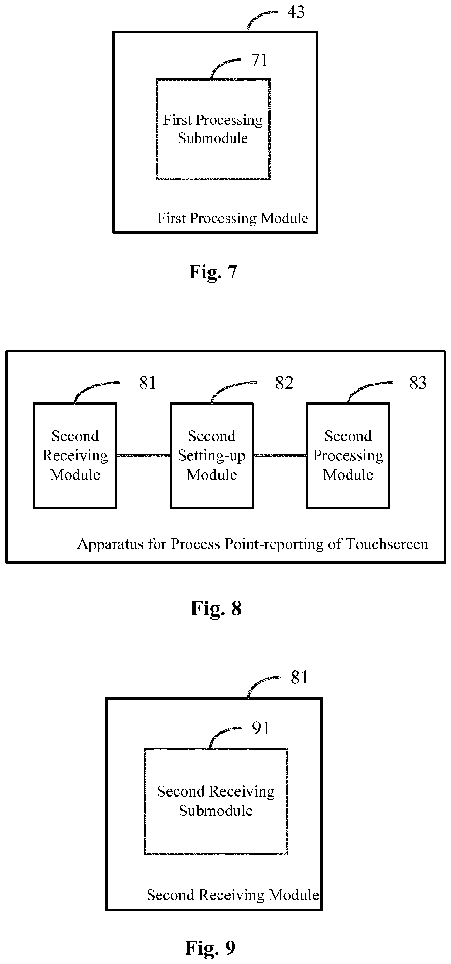

As shown in FIG. 7, which is a block diagram of an apparatus for processing point-reporting of a touch screen shown according to another exemplary embodiment of the present disclosure. In this embodiment, on the basis of the embodiment as shown in the foregoing FIG. 6, the first processing module 43 may include a first processing submodule 71.

The first processing submodule 71 is configured to process point-reporting of the touch screen according to the first sensitivity threshold and the first scanning frequency.

As can be seen from the above embodiments, after receiving the first status signal, a corresponding first sensitivity threshold and a first scanning frequency may be set up, and point-reporting of the touch screen is processed according to the first sensitivity threshold and the first scanning frequency. An error of point-reporting may be minimized by using point-reporting information obtained after such processing. In this way, confusion brought about to users due to an error of point-reporting is avoided, and user experience can be improved.

As shown in FIG. 8, which is a block diagram of an apparatus for processing point-reporting of a touch screen shown according to another exemplary embodiment of the present disclosure. In this embodiment, on the basis of the embodiment as shown in the foregoing FIG. 4, the apparatus may further include a second receiving module 81, a second setting-up module 82 and a second processing module 83.

The second receiving module 81 is configured to receive a second status signal sent by the power management module when the power management module detects that the charging port is in an idle status, where the second status signal is used for indicating that the charging port is in the idle status.

The second setting-up module 82 is configured to set up a second sensitivity threshold corresponding to the second status signal received by the second receiving module, where the second sensitivity threshold is lower than the first sensitivity threshold.

The second processing module 83 is configured to process point-reporting of the touch screen according to the second sensitivity threshold set up by the second setting-up module, and send point-reporting information obtained after processing to the host terminal.

As can be seen from the above embodiments, a second status signal sent by the power management module is received when the power management module detects that the charging port is in an idle status, where the second status signal is used for indicating that the charging port is in an idle status. A second sensitivity threshold is set up corresponding to the second status signal, where the second sensitivity threshold is lower than the first sensitivity threshold. Point-reporting of the touch screen is processed according to the second sensitivity threshold, and point-reporting information obtained after the processing is sent to a host terminal. Since, particularly, the second sensitivity threshold is lower than the first sensitivity threshold, under a premise of guaranteeing to correctly process point-reporting of the touch screen, energy consumption is saved, and a safety performance of the terminal is improved.

As shown in FIG. 9, which is a block diagram of an apparatus for processing point-reporting of a touch screen shown according to another exemplary embodiment of the present disclosure. In this embodiment, on the basis of the embodiment as shown in the foregoing FIG. 8, the second receiving module 81 may include a second receiving submodule 91.

The second receiving submodule 91 is configured to receive the second status signal forwarded by the host terminal, where the second status signal is sent by the power management module to the host terminal and then is forwarded by the host terminal to the touch screen.

The first status signal received by the second receiving module 81 may be first status information directly sent by the power management terminal to the touch screen by means of hardware interrupt. The first status signal received by the second receiving submodule 91 may be a first status signal sent by the power management terminal to the host terminal by means of software instructions and then forwarded by the host terminal to the touch screen.

As can be seen from the above embodiments, the power management module may send the second status signal to the touch screen by means of hardware interrupt or software instructions. In this way, personality design requirements of the first terminal are fulfilled, and efficiency in processing point-reporting of the touch screen is thus improved.

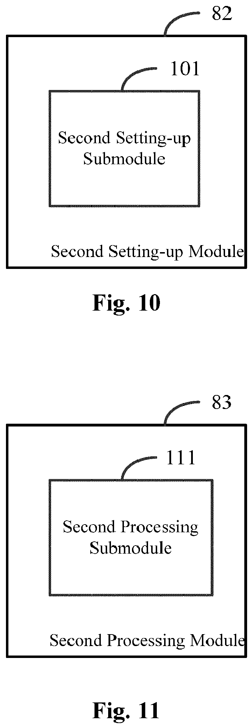

As shown in FIG. 10, which is a block diagram of an apparatus for processing point-reporting of a touch screen shown according to another exemplary embodiment of the present disclosure. In this embodiment, on the basis of the embodiment as shown in the foregoing FIG. 8 or FIG. 9, the second setting-up module 82 may include a second setting-up submodule.

The second setting-up submodule 82 is configured to set up a second scanning frequency corresponding to the second status signal.

As shown in FIG. 11, which is a block diagram of an apparatus for processing point-reporting of a touch screen shown according to another exemplary embodiment of the present disclosure. In this embodiment, on the basis of the embodiment as shown in the foregoing FIG. 10, the second processing module 83 may include a second processing submodule 111.

The second processing submodule 111 is configured to process point-reporting of the touch screen according to the second sensitivity threshold and the second scanning frequency.

As can be seen from the above embodiments, after receiving the second status signal, a corresponding second sensitivity threshold and a second scanning frequency may be set up, and point-reporting of the touch screen is processed according to the second sensitivity threshold and second first scanning frequency. An error of point-reporting may be minimized by using point-reporting information obtained after such processing. In this way, confusion brought about to users due to an error of point-reporting is avoided, and user experience is improved.

Corresponding to FIG. 4, the present disclosure further provides another apparatus for processing point-reporting of a touch screen, where the apparatus is applied to a touch screen of a first terminal and includes:
a processor, and
a memory configured to store instructions executable by the processor;
where the processor is configured to:
   receive a first status signal sent by a power management module when the power management module of the first terminal detects that a charging port of the first terminal is in a connection status, where the first status signal is used for indicating that the charging port of the first terminal is in the connection status;
   set up a first sensitivity threshold corresponding to the first status signal; and
   process point-reporting of the touch screen according to the first sensitivity threshold, and send point-reporting information obtained after the processing to a host terminal of the first terminal.

Specific implementations of functions and roles of units in the above device are seen in detail in implementations of corresponding blocks in above methods, not elaborated herein.

Apparatus embodiments are basically corresponding to method embodiments, thus method embodiments can serve as reference. Device embodiments set forth above are merely exemplary, wherein units described as detached parts can be or not be detachable physically; parts displayed as units can be or not be physical units, i.e., either located at the same place, or distributed on a plurality of network units. Modules can be selected in part or in whole according to the actual needs for realization of solutions of the present disclosure. It is conceivable and executable for those of ordinary skill in the art without creative labor.

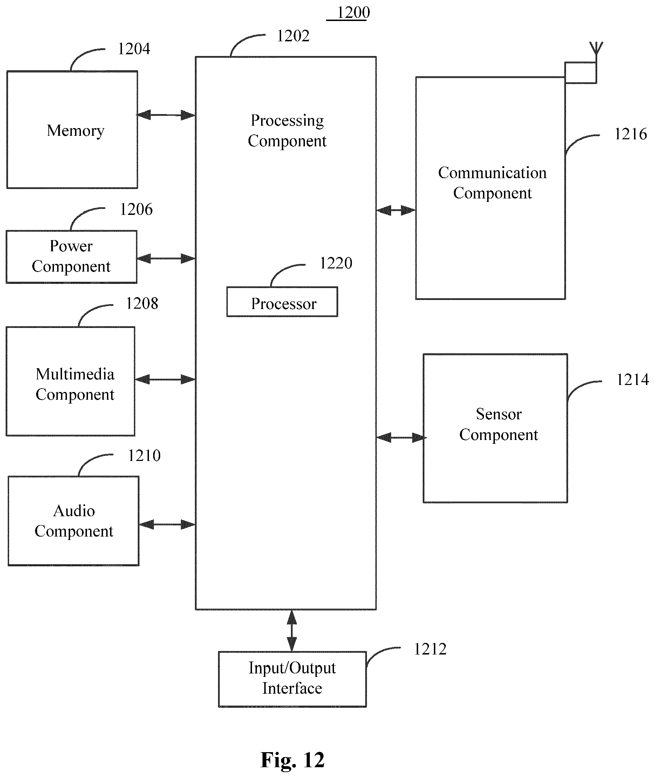

As shown in FIG. 12, FIG. 12 illustrates a schematic structural diagram of an apparatus 1200 for processing point-reporting of a touch screen according to an exemplary embodiment of the present disclosure (a first terminal). For example, the apparatus 1200 may be a mobile telephone having routing function, a computer, a digital broadcasting terminal, a message sending and receiving device, a games console, a tablet device, a medical device, a fitness device, a personal digital assistant and so on.

Referring to FIG. 12, the apparatus 1200 may include one or more of the following components: a processor component 1202, a memory 1204, a power supply component 1206, a multimedia component 1208, an audio component 1210, an input/output (I/O) interface 1212, a sensor component 1214 and a communication component 1216.

The processor component 1202 typically controls overall operations of the apparatus 1200, such as operations associated with display, telephone calls, data communication, camera operations, and recording operations. The processor module 1202 may include one or more processors 1220 to execute instructions to perform all or part of the steps in the above described methods. Moreover, the processor component 1202 may include one or more modules which facilitate the interaction between the processor component 1202 and other components. For instance, the processor component 1202 may include a multimedia module to facilitate the interaction between the multimedia component 1208 and the processor component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 1206 provides power to various components of the apparatus 1200. The power supply component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the apparatus 1200 is in an operation mode, such as a photographing mode or a video mode. Each of the front camera and the rear camera may be a fixed optical lens system or have focus and optical zoom capability.

The audio module 1210 is configured to output and/or input audio signals. For example, the audio module 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processor component 1202 and peripheral interface modules, such as a keyboard, a click wheel, buttons, and the like. These buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor module 1214 may also include an accelerometer sensor, a gyroscope sensor, a magnetic sensor, a pressure sensor, a microwave sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

## Claims

1. A method for processing point-reporting of a touch screen, wherein the method is applied to the touch screen of a first terminal and comprises:
receiving (110) a first status signal sent by a power management module when the power management module of the first terminal detects that a charging port of the first terminal is in a connection status, the first status signal indicating the connection status of the charging port of the first terminal;
setting up (120) a first sensitivity threshold corresponding to the first status signal; and
processing (130) point-reporting of the touch screen according to the first sensitivity threshold, and sending point-reporting information obtained after the processing to a host terminal of the first terminal.

2. The method according to claim 1, wherein the receiving a first status signal sent by a power management module comprises:
receiving the first status signal forwarded by the host terminal, wherein the first status signal being sent by the power management module to the host terminal and then forwarded by the host terminal to the touch screen.

3. The method according to claim 1 or 2, wherein the setting up a first sensitivity threshold corresponding to the first status signal further comprises:
setting up a first scanning frequency corresponding to the first status signal.

4. The method according to claim 3, wherein the processing point-reporting of the touch screen according to the first sensitivity threshold comprises:
processing point-reporting of the touch screen according to the first sensitivity threshold and the first scanning frequency.

5. The method according to claim 1, further comprising:
receiving (210) a second status signal sent by the power management module when the power management module detects that the charging port is in an idle status, the second status signal indicating the idle status of the charging port;
setting up (220) a second sensitivity threshold corresponding to the second status signal, the second sensitivity threshold being lower than the first sensitivity threshold; and
processing (230) point-reporting of the touch screen according to the second sensitivity threshold, and sending point-reporting information obtained after the processing to the host terminal.

6. The method according to claim 5, wherein the receiving a second status signal sent by the power management module comprises:
receiving the second status signal forwarded by the host terminal, wherein the second status signal is sent by the power management module to the host terminal and then is forwarded by the host terminal to the touch screen.

7. The method according to claim 5 or 6, wherein the setting up a second sensitivity threshold corresponding to the second status signal further comprises:
setting up a second scanning frequency corresponding to the second status signal.

8. The method according to claim 7, wherein the processing point-reporting of the touch screen according to the second sensitivity threshold comprises:
processing point-reporting of the touch screen according to the second sensitivity threshold and the second scanning frequency.

9. An apparatus for processing point-reporting of a touch screen, wherein the apparatus is applied to a touch screen of a first terminal and comprises:
a first receiving module (41) configured to receive a first status signal sent by a power management module when the power management module of the first terminal detects that a charging port of the first terminal is in a connection status, the first status signal indicating the connection status of the charging port of the first terminal;
a first setting-up module (42) configured to set up a first sensitivity threshold corresponding to the first status signal received by the first receiving module; and
a first processing module (43) configured to process point-reporting of the touch screen according to the first sensitivity threshold set up by the first setting-up module, and send point-reporting information obtained after the process to a host terminal of the first terminal.

10. The apparatus according to claim 9, wherein the first receiving module (41) comprises:
a first receiving submodule (51) configured to receive the first status signal forwarded by the host terminal, the first status signal being sent by the power management module to the host terminal and then forwarded by the host terminal to the touch screen.

11. The apparatus according to claim 10, wherein the first setting-up module (42) comprises:
a first setting-up submodule (61) configured to set up a first scanning frequency corresponding to the first status signal.

12. The apparatus according to claim 11, wherein the first processing module (43) comprises:
a first processing submodule (71) configured to process point-reporting of the touch screen according to the first sensitivity threshold and the first scanning frequency.

13. The apparatus according to claim 9, further comprising:
a second receiving module (81) configured to receive a second status signal sent by the power management module when the power management module detects that the charging port is in an idle status, the second status signal indicating the idle status of the charging port;
a second setting-up module (82) configured to set up a second sensitivity threshold corresponding to the second status signal received by the second receiving module, the second sensitivity threshold being lower than the first sensitivity threshold; and
a second processing module (83) configured to process point-reporting of the touch screen according to the second sensitivity threshold set up by the second setting-up module, and send point-reporting information obtained after the process to the host terminal.

14. The apparatus according to claim 13, wherein the second receiving module (81) comprises:
a second receiving submodule (91) configured to receive the second status signal forwarded by the host terminal, the second status signal being sent by the power management module to the host terminal and then forwarded by the host terminal to the touch screen.

15. The apparatus according to claim 13 or 14, wherein the second setting-up module (82) comprises:
a second setting-up submodule (101) configured to set up a second scanning frequency corresponding to the second status signal.

16. The apparatus according to claim 15, wherein the second processing module (83) comprises:
a second processing submodule (111) configured to process point-reporting of the touch screen according to the second sensitivity threshold and the second scanning frequency.

17. An apparatus (1200) for processing point-reporting of a touch screen, wherein the apparatus is applied to a touch screen of a first terminal and comprises:
a processor (1220), and
a memory (1204) configured to store instructions executable by the processor (1220);
wherein the processor (1220) is configured to:
receive a first status signal sent by a power management module when the power management module of the first terminal detects that a charging port of the first terminal is in a connection status, the first status signal indicating the connection status of the charging port of the first terminal;
set up a first sensitivity threshold corresponding to the first status signal; and
process point-reporting of the touch screen according to the first sensitivity threshold, and send point-reporting information obtained after the processing to a host terminal of the first terminal.

18. A program product having stored therein instructions that, when executed by one or more processors of a terminal device, causes the terminal device to perform the method for
processing point-reporting of a touch screen according to any one of claims 1-8.
